# EUROPEAN PATENT APPLICATION

(11) **EP 3 828 968 A1**
(43) Date of publication of application: **02.06.2021**
(21) Application number: 19842017.6
(22) Date of filing: 23.07.2019
(51) Int. Cl.: H01M 4/525, H01M 4/131, H01M 4/36, H01M 4/505, H01M 4/62, H01M 10/052, H01M 10/0562

(54) **POSITIVE ELECTRODE ACTIVE MATERIAL**

(30) Priority: 25.07.2018 JP 2018139818
(71) Applicant: Mitsui Mining & Smelting Co., Ltd., Shinagawa-ku, Tokyo 141-8584 (JP)
(72) Inventor: NAKAYAMA, Yuki, Ageo-shi, Saitama 362-0021 (JP); WASHIDA, Daisuke, Ageo-shi, Saitama 362-0021 (JP); IDE, Hitohiko, Ageo-shi, Saitama 362-0021 (JP)
(74) Representative: Novagraaf Technologies
(86) International application number: PCT/JP2019/028762
(87) International publication number: WO 2020/022305

(57) **Abstract**

The present invention provides a positive electrode active material with which an increase in the interface resistance between the positive electrode active material and a sulfide solid electrolyte over time can be suppressed and also the interface resistance is low. The positive electrode active material of the present invention includes particles that have core particles containing a complex oxide of lithium and a metal element and a coating layer arranged on the surface of the core particles, and is used in a solid-state battery containing a sulfide solid electrolyte. The coating layer is composed of an oxide containing Li and M, where M represents one or two or more elements selected from the group consisting of B, Nb, Ti, Zr, Ta, Zn, W, and Al, or M is B when M represents one element. The molar ratio of Li/M on the surface of the coating layer, as obtained by X-ray photoelectron spectroscopy, is from 0.85 to 3.95.

## Description

### Technical Field

The present invention relates to a positive electrode active material that is used in a solid-state battery containing a sulfide solid electrolyte.

### Background Art

Lithium-ion rechargeable batteries have a large energy density and it is easy to reduce their size and weight, and thus they are widely used as power sources of portable electronic devices such as laptop computers and mobile phones. Furthermore, recently, lithium-ion rechargeable batteries with high output and high capacity are being developed that are mounted in electric vehicles, hybrid electric vehicles, and the like.

Currently, many lithium-ion rechargeable batteries use an electrolyte solution containing a flammable organic solvent. Thus, when the temperature of a battery increases due to a short circuit or the like, the electrolyte solution has a risk of ignition. Meanwhile, solid-state batteries using a solid electrolyte instead of an electrolyte solution and not containing a flammable organic solvent are unlikely to have a risk of ignition, and thus their implementation has raised expectations as batteries having both high safety and high energy density.

As a solid electrolyte that is used in a solid-state battery, research has been conducted on a sulfide solid electrolyte. However, if a solid-state battery containing a sulfide solid electrolyte is charged and discharged, an interface resistance between an electrode active material and the sulfide solid electrolyte increases, which results in a problem that transportation of lithium ions is restricted. The reason for this seems to be that an electrode active material and a sulfide solid electrolyte react with each other to form a resistive layer at an interface therebetween. Regarding this problem, an attempt has been made to suppress an increase in the interface resistance by coating the surface of a positive electrode active material with a specific compound (Patent Literatures 1 to 3).

### Citation List

### Patent Literatures

Patent Literature 1: JP 2012-99323A
Patent Literature 2: US 2014/072875A1
Patent Literature 3: JP 2015-201388A

### Summary of Invention

If the surface of a positive electrode active material is coated with a specific compound or the like in order to reduce the interface resistance between the electrode active material and a sulfide solid electrolyte, an increase in the interface resistance over time can be suppressed. On the other hand, however, there is the problem in that the interface resistance is likely to be high.

In view of the above-described problems, it is a main object of the present invention to provide a positive electrode active material with which an increase in the interface resistance between the electrode active material and a sulfide solid electrolyte over time can be suppressed and also the interface resistance is low.

As a result of in-depth research, the inventors of the present invention have been found that the above-described problems can be addressed by arranging a specific coating layer on the surface of electrode active material particles. That is to say, the present invention provides a positive electrode active material for use in a solid-state battery containing a sulfide solid electrolyte, the positive electrode active material including particles that have core particles containing a complex oxide of lithium and a metal element and a coating layer arranged on a surface of the core particles, wherein the coating layer is composed of an oxide containing Li and M, where M represents one or two or more elements selected from the group consisting of B, Nb, Ti, Zr, Ta, Zn, W, and Al, or M is B when M represents one element, and a molar ratio of Li/M on a surface of the coating layer, as obtained by X-ray photoelectron spectroscopy, is from 0.85 to 3.95.

### Description of Embodiments

The present invention relates to a positive electrode active material that is used in a solid-state battery. The positive electrode active material of the present invention includes particles that have core particles containing a complex oxide of lithium and a metal element and a coating layer arranged on the surface of the core particles. The coating layer may coat the entire surface of the core particles, or partially coat the surface of the core particles such that part of the surface of the core particles is exposed.

Known complex oxides of lithium and a metal element may be used as the complex oxide of lithium and a metal element. Both a transition element and a typical element may be used as the metal, and preferably a transition element is used. Examples of the complex oxide of lithium and a metal element include lithium-transition metal oxides such as lithium cobaltate (LiCoO₂), lithium nickelate (LiNiO₂), lithium manganate (LiMn₂O₄), and lithium nickel cobalt manganese oxide (Li(Ni, Co, Mn)O₂).

In the present invention, it is preferable to use a compound represented by the general formula (1), Li₁₊ₓM¹₁₋ₓO₂, as the complex oxide of lithium and a metal element: where M¹ represents a metal selected from the group consisting of Mn, Co, and Ni, as well as a transition element in groups 3 to 11 of the periodic table and a typical element in periods 1 to 3 of the periodic table. There is no particular limitation on the structure of the compound, and it may be, for example, a layered rock salt-type compound, or a spinel-type compound.

In the general formula (1), "1+x" is preferably from 1.00 to 1.07, more preferably from 1.01 to 1.06, and even more preferably from 1.02 to 1.05. It is preferable that the value of "1+x" is 1.00 or more, that is, the number of lithium ions is 1.00 or more, because the structure can be suppressed from becoming unstable through charge and discharge, and good cycle characteristics can be achieved.

In the general formula (1), "M¹" may be any metal that is selected from the group consisting of Mn, Co, and Ni, as well as a transition element in groups 3 to 11 of the periodic table and a typical element in periods 1 to 3 of the periodic table. Examples of the transition element in groups 3 to 11 of the periodic table and the typical element in periods 1 to 3 of the periodic table include Al, V, Fe, Ti, Mg, Cr, Ga, In, Cu, Zn, Nb, Zr, Mo, W, Ta, and Re. "M¹" may be composed only of the three elements, Mn, Co, and Ni, or may also contain another element in addition to these three elements.

In the case where the above-described "M¹" contains the three elements, Mn, Co, and Ni, the molar ratio between Mn, Co, and Ni is preferably Mn:Co:Ni = 0.10 to 0.45:0.03 to 0.40:0.30 to 0.85, and more preferably Mn:Co:Ni = 0.10 to 0.40:0.03 to 0.40:0.30 to 0.80. Note that, although the ratio of oxygen atoms in the general formula (1) above is specified as "2" for the sake of convenience, the compound may be somewhat non-stoichiometric.

The core particles used in the present invention contain the complex oxide of lithium and a metal element in an amount of preferably 80 mass% or more, more preferably 90 mass% or more, and particularly preferably 95 mass% or more. Moreover, the core particles may be composed only of the complex oxide of lithium and a metal element. As the complex oxide of lithium and a metal element, a complex oxide of lithium and a metal element may be used alone, or two or more complex oxides of lithium and a metal element may be used in combination.

The coating layer arranged on the surface of the core particles is composed of an oxide containing Li and M, where M represents one or two or more elements selected from the group consisting of B, Nb, Ti, Zr, Ta, Zn, W, and Al, or M is B when M represents one element. In the case where the coating layer contains Li and B, and an element other than these elements, the coating layer may be composed of a single oxide containing Li, B, and the other element. Alternatively, the coating layer may be composed of a mixture of a plurality of oxides including an oxide containing Li and B and an oxide containing Li and the other element. Examples of the oxide constituting the coating layer include, but are not limited to, LiBO₂, Li₃BO₃, Li₈Nb₆O₁₉, Li₂B₄O₇, LiB₅O₈, and LiNbO₃.

The molar ratio of Li/M on the surface of the coating layer, as obtained by X-ray photoelectron spectroscopy (XPS), is preferably from 0.85 to 3.95, more preferably from 1.0 to 3.8, even more preferably from 1.5 to 3.5, and most preferably from 1.9 to 3.3. When the molar ratio of Li/M is set within these ranges, an increase in the interface resistance between the positive electrode active material and the sulfide solid electrolyte over time can be suppressed, and the interface resistance can be reduced. Specifically, when the molar ratio of Li/M is set to 0.85 or more, the Li ion conductivity of the coating layer improves. On the other hand, when the molar ratio of Li/M is set to 3.95 or less, the generation of lithium carbonate and Li₃BO₃ is suppressed, and an increase in the interface resistance can be suppressed. Moreover, when the molar ratio of Li/M is set within the above-described range, not only the generation of lithium carbonate can be suppressed, but also the generation of LiBO₂ is facilitated. Since it is considered that LiBO₂ is less likely to increase the interface resistance than Li₃BO₃, it is advantageous to generate LiBO₂, instead of Li₂BO₃. The molar ratio of Li/M can be set to a desired value by adjusting the molar ratio of Li/M in raw materials that are used to form the coating layer.

The proportion of B in the positive electrode active material of the present invention is preferably from 0.02 to 3.5 mass%, more preferably from 0.1 to 3.3 mass%, and even more preferably from 0.5 to 3.0 mass%. When the proportion of B is set within these ranges, the interface resistance can be effectively reduced. The proportion of B in the positive electrode active material can be set to a desired value by adjusting the ratio between the amount of the core particles and the amount of the raw materials of the coating layer, during the formation of the coating layer.

In the present invention, the coating layer may be composed only of an oxide containing Li and B. In this case, the molar ratio of Li/B on the surface of the coating layer, as obtained by XPS, is preferably from 0.85 to 3.95, more preferably from 1.0 to 3.8, even more preferably from 1.5 to 3.5, and most preferably from 1.9 to 3.3. Note that the value of Li of the molar ratio Li/B includes the amount of Li derived from the core particles.

In the present invention, as described above, the coating layer may also be composed of an oxide containing Li, B, and another element. An oxide containing Li, B, and, for example, one or two or more elements selected from the group consisting of Nb, Ti, Zr, Ta, Zn, W, and Al may be used as the coating layer. Of these, an oxide containing Nb may be favorably used. In this case, the mass ratio of Nb/B in the positive electrode active material is preferably from 1 to 30, more preferably from 3 to 25, and even more preferably from 5 to 20. When the mass ratio of Nb/B is set within these ranges, a positive electrode active material with low interface resistance can be obtained. The mass ratio of Nb/B in the positive electrode active material can be set to a desired value by adjusting the mass ratio of Nb/B in the coating layer during the formation of the coating layer. Moreover, in common with Nb, the elements Ti, Zr, Ta, Zn, W, and Al are valve metals. An oxide of a valve metal exhibits excellent corrosion resistance and therefore has the effect of suppressing a surface reaction. Thus, it can be considered that an oxide containing any of the above-described elements other than Nb can also achieve similar effects.

The proportion of the total amount of B and Nb in the positive electrode active material of the present invention is preferably from 0.5 to 2.5 mass%, more preferably 2.0 mass% or less, and even more preferably 1.5 mass% or less. If the proportion of the total amount of B and Nb exceeds this range, the interface resistance may become high. The proportion of the total weight of B and Nb in the positive electrode active material can be set to a desired value by adjusting the ratio between the amount of the core particles and the amount of the raw materials of the coating layer, during the formation of the coating layer.

In the case where an oxide containing Li and Nb is used as a constituent component of the coating layer, the molar ratio of Li/(B+Nb) on the surface of the coating layer, as obtained by XPS, is preferably from 1.5 to 3.6, and more preferably from 2.5 to 3.5. When the molar ratio of Li/(B+Nb) is set within these ranges, the generation of Nb₂O₅ and B₂O₃, which may form a resistive layer, can be suppressed, and an increase in interface resistance over time can be suppressed.

The core particles containing the complex oxide of lithium and a metal element used in the present invention can be obtained, for example, using a method in which raw materials such as a lithium salt compound, a manganese salt compound, a nickel salt compound, and a cobalt salt compound are weighed and mixed, milled using a wet mill or the like, granulated, fired, heat-treated when necessary, disintegrated under preferable conditions, and sieved when necessary. Instead of this method, the core particles can also be obtained using a method in which a basic substance such as sodium hydroxide is added to an aqueous solution containing a manganese salt compound, a nickel salt compound, and a cobalt salt compound so that a metal complex hydroxide is precipitated, and the metal complex hydroxide and a lithium salt compound are mixed and fired.

Examples of the lithium salt compound used as a raw material include lithium hydroxide (LiOH), lithium carbonate (Li₂CO₃), lithium nitrate (LiNO₃), LiOH·H₂O, lithium oxide (Li₂O), fatty acid lithium, and lithium halide. Of these substances, lithium hydroxide, lithium carbonate, and lithium nitrate are preferable.

Examples of the manganese salt compound include manganese carbonate, manganese nitrate, manganese chloride, and manganese dioxide. Of these substances, manganese carbonate and manganese dioxide are preferable, and electrolytic manganese dioxide obtained by the electrolytic method is particularly preferable.

Examples of the nickel salt compound include nickel carbonate, nickel nitrate, nickel chloride, nickel oxyhydroxide, nickel hydroxide, and nickel oxide, and, of these substances, nickel carbonate, nickel hydroxide, and nickel oxide are preferable.

Examples of the cobalt salt compound include basic cobalt carbonate, cobalt nitrate, cobalt chloride, cobalt oxyhydroxide, cobalt hydroxide, and cobalt oxide, and, of these substances, basic cobalt carbonate, cobalt hydroxide, cobalt oxide, and cobalt oxyhydroxide are preferable.

The mixing of the above-described raw materials is preferably performed by adding a liquid medium such as water and a dispersant and performing wet mixing, thereby forming the mixture into a slurry. If the later-described spray drying is used, the obtained slurry is preferably milled using a wet mill, but may also be subjected to dry milling.

The granulation method may be either a wet method or a dry method as long as the raw materials milled in the preceding step are dispersed in the granulated particles without being separated, and examples of the method include extruding granulation, tumbling granulation, fluidized bed granulation, mix granulation, spray drying granulation, pressure molding granulation, and flake granulation using a roll or the like.

When performing wet granulation, it is necessary to sufficiently dry the material before firing. Examples of the drying method include known drying methods such as heat spray drying, hot air drying, vacuum drying, and freeze drying, and, of these methods, heat spray drying is preferable. The heat spray drying is preferably performed using a heat spray drier (spray drier).

The firing is preferably performed in a kiln, in an air atmosphere, an oxygen gas atmosphere, an atmosphere in which the oxygen partial pressure has been adjusted, a carbon dioxide gas atmosphere, or other atmospheres by keeping the temperature higher than 800°C and lower than 1000°C, preferably 810 to 1000°C, and more preferably 810 to 950°C for 0.5 to 30 hours. At this time, it is preferable to select firing conditions such that the transition metal is dissolved and forms a solid solution at an atom level to form a single phase. There is no particular limitation on the type of kiln, and examples thereof that can be used for firing include a rotary kiln, a static kiln, and other kilns.

The heat treatment after the firing is preferably performed when it is necessary to adjust the crystal structure, and, for example, the heat treatment is performed under conditions in an oxidizing atmosphere such as an air atmosphere, an oxygen gas atmosphere, or an atmosphere in which the oxygen partial pressure has been adjusted.

The disintegration after the firing or the heat treatment is preferably performed using a high-speed rotary mill, although there is no limitation to the use of a high-speed rotary mill. The disintegration using a high-speed rotary mill enables portions where particles are aggregated or weakly sintered to be disintegrated, thereby making it possible to prevent particles from deforming.

The coating layer on the surface of the thus obtained core particles may be formed using a method in which a treatment liquid containing Li and B, as well as another element when necessary, and the core particles are brought into contact with each other. For example, in the case where a coating layer composed of an oxide containing Li and B is to be formed, a method may be used in which a treatment liquid containing Li and B and the core particles are mixed and dried. Specifically, a treatment liquid obtained by dissolving LiOH·H₂O and H₃BO₃ in water and the core particles are mixed and dried, and then disintegrated and heat-treated when necessary, and thus, a coating layer composed of an oxide containing Li and B can be formed on the surface of the core particles. Any compound that contains necessary elements can be used as a raw material used in the preparation of the treatment liquid, and examples of the compound include an oxide, a halide, a hydroxide, a carbonate, and a nitrate.

It is preferable that the amount of treatment liquid used is adjusted such that the proportion of B in the positive electrode active material is from 0.02 to 3.5 mass%, more preferably from 0.1 to 3.3 mass%, and even more preferably from 0.5 to 3.0 mass%. The concentration of the treatment liquid is not particularly limited, but is preferably 1 to 10 mass% because handling is easy.

A volume cumulative particle size D₅₀ of the thus obtained positive electrode active material at a cumulative volume of 50 vol% as measured using a laser diffraction scattering particle size distribution measurement method is preferably 20 m or less, more preferably less than 15 m, even more preferably more than 1 m and less than 10 m, and yet even more preferably more than 2 m and 8 m or less. A D₅₀ of 20 m or less is preferable because good contact with a solid electrolyte in a material mixture can be ensured, and the utilization of lithium ions in the active material can be improved. Moreover, when D₅₀ is more than 1 m, the slurry viscosity can be prevented from increasing through aggregation of particles. In order to adjust D₅₀ of the positive electrode active material to the above-described range, it is possible to adjust D₅₀ of starting materials, the firing temperature or the firing time, the disintegration conditions after the firing, or the like, but there is no limitation to these adjusting methods.

The positive electrode active material of the present invention is used in a solid-state battery including a solid electrolyte. In particular, it is advantageous that the positive electrode active material of the present invention is used in a solid-state battery containing a sulfide solid electrolyte as a solid electrolyte. In the solid-state battery, there is a contact portion between the positive electrode active material of the present invention and the sulfide solid electrolyte, and thus the effects of the present invention can be achieved. Note that "there is a contact portion between the positive electrode active material and the sulfide solid electrolyte" means any one of a state (a) in which the positive electrode mixture contains the sulfide solid electrolyte (in this case, the solid electrolyte layer may also be a non-sulfide), a state (b) in which the positive electrode mixture does not contain the sulfide solid electrolyte, and the solid electrolyte layer contains the sulfide solid electrolyte, and a state (c) in which the positive electrode mixture contains the sulfide solid electrolyte, and the solid electrolyte layer contains the sulfide solid electrolyte.

The sulfide solid electrolyte used in the present invention may be any sulfide solid electrolyte as long as it contains Li and S and has lithium ion conductivity. The sulfide solid electrolyte may be any of crystalline material, glass ceramic, and glass. Examples of the sulfide solid electrolyte include Li₂S-P₂S₅, Li₂S-P₂S₅-LiHa ("Ha" is one or more halogen elements), Li₂S-P₂S₅-P₂O₅, Li₂S-Li₃PO₄-P₂S₅, Li₃PS₄, Li₄P₂S₆, Li₁₀GeP₂S₁₂, Li_{3.25}Ge_{0.25}P_{0.75}S₄, Li₇P₃S₁₁, Li_{3.25}P_{0.95}S₄, and Li₇₋ₓPS₆₋ₓHaₓ (argyrodite-type solid electrolyte, "Ha" is one or more halogen elements, where 0.2 < x < 1.8).

The positive electrode active material of the present invention may also be used in a combination with another positive electrode active material. Examples of the other positive electrode active material include particles composed of the above-described known complex oxides of lithium and a transition metal, where the particles may or may not have a coating layer. When used in combination, it is preferable that the positive electrode active material of the present invention is contained in an amount of preferably 50 mol% or more, and more preferably 70% or more, with respect to the entire active material.

The positive electrode active material of the present invention can be formed into a positive electrode mixture of a solid-state battery by being mixed with the above-described sulfide solid electrolyte when necessary. In the case where the positive electrode active material is mixed with the sulfide solid electrolyte, the proportion of the sulfide solid electrolyte in the entire positive electrode mixture is typically from 10 to 50 wt%. Furthermore, the positive electrode mixture may also contain other materials such as a conductivity aid and a binder when necessary. A positive electrode can be formed by preparing a paste by mixing the positive electrode mixture and a solvent, applying the paste to a current collector such as an aluminum foil, and drying the paste.

As the conductivity aid, for example, artificial graphite, carbon black (acetylene black), and the like may be favorably used. As the binder, for example, polyvinylidene fluoride (PVdF); PVdF copolymer reins such as a copolymer of PVdF and hexafluoropropylene (HFP) and a copolymer of PVdF, perfluoromethyl vinyl ether (PFMV) and tetrafluoroethylene; fluorine-based resins such as polytetrafluoroethylene and fluororubber; hydrocarbon polymers such as a styrene-butadiene copolymer and a styreneacrylonitrile copolymer; carboxymethyl cellulose; polyimide resin; and the like may be used, but there is no limitation to these substances. Moreover, these substances may be used alone, or as a mixture of two or more.

A solid-state battery can be produced using the positive electrode active material of the present invention and a known method. For example, a solid-state battery can be produced by pressure molding a positive electrode formed in the above-described manner, a solid electrolyte layer, and a negative electrode that are stacked in three layers.

As a negative electrode active material used in the negative electrode, it is possible to use known materials such as materials that absorb and discharge lithium ions, for example, carbon materials, silicon oxide-based compounds such as silicon and Si-O, and lithium titanate. Examples of the carbon materials include those obtained by sintering organic high molecular compounds such as polyacrylonitrile, phenol resin, phenol novolac resin, and cellulose, artificial graphite, and natural graphite. The negative electrode can be produced in a similar manner to that of the positive electrode, except that such a negative electrode active material is used.

### Examples

Hereinafter, the present invention will be more specifically described by way of examples. However, the present invention is not limited to the following examples.

### Example 1

### (1) Production of Core particles

First, sodium hydroxide was supplied to an aqueous solution in which nickel sulfate, cobalt sulfate, and manganese sulfate were dissolved, and thus a metal complex hydroxide was produced using the coprecipitation method. The molar ratio between nickel, cobalt, and manganese in the metal complex hydroxide was Ni:Co:Mn = 0.6:0.2:0.2. The metal complex hydroxide was mixed with lithium carbonate, calcined using a static electric kiln in air at 720°C for 5 hours, and then fired in air at 905°C for 22 hours, and thus a complex oxide of lithium and a metal element was obtained. This complex oxide of lithium and a metal element was disintegrated in a mortar, and sieved with a sieve with an opening of 53 m, and thus core particles composed of a complex oxide of lithium and a metal element powder that was an undersize product were collected. The core particles were a layered rock salt-type compound, and the molar ratio between nickel, cobalt, and manganese was Ni:Co:Mn = 0.6:0.2:0.2, as in the metal complex hydroxide described above.

### (2) Production of Positive Electrode Active Material

First, 4.194 g of LiOH·H₂O and 6.181 g of H₃BO₃ were dissolved in 200 ml of water to prepare a treatment liquid. Hereinafter, this treatment liquid will be referred to as a treatment liquid A. Then, 4.8 mL of the treatment liquid A was added to 10 g of the core particles obtained in the step (1), followed by stirring at 25°C for 1 hour and then drying at 130°C for 2 hours. The obtained solid was heat-treated at 350°C for 5 hours in an air atmosphere, and thus a positive electrode active material was obtained.

### Example 2

A positive electrode active material was obtained in a similar manner to that of Example 1, except that 12 mL of the treatment liquid A was added.

### Example 3

A positive electrode active material was obtained in a similar manner to that of Example 1, except that 28 mL of the treatment liquid A was added.

### Example 4

A positive electrode active material was obtained in a similar manner to that of Example 1, except that 55 mL of the treatment liquid A was added.

### Example 5

First, 0.76 g of LiOH·H₂O and 3.75 g of (NH₄)₃Nb(O₂)₄ were dissolved in 75 mL of water to prepare a treatment liquid. Hereinafter, this treatment liquid will be referred to as a treatment liquid B. Then, 3.3 mL of the treatment liquid A and 4.7 mL of the treatment liquid B were added to 10 g of the core particles used in Example 1, followed by stirring at 25°C for 1 hour and then drying at 130°C for 2 hours. The obtained solid was heat-treated at 350°C for 5 hours in an air atmosphere, and thus a positive electrode active material was obtained.

### Example 6

A positive electrode active material was obtained in a similar manner to that of Example 5, except that 6.6 mL of the treatment liquid A and 9.5 mL of the treatment liquid B were added.

### Example 7

A positive electrode active material was obtained in a similar manner to that of Example 5, except that 6.6 mL of the treatment liquid A and 9.5 mL of the treatment liquid B were added.

### Example 8

First, 12.582 g of LiOH·H₂O and 6.181 g of H₃BO₃ were dissolved in 200 ml of water to prepare a treatment liquid. Hereinafter, this treatment liquid will be referred to as a treatment liquid C. Then, 10.4 mL of the treatment liquid C was added to 10 g of the core particles used in Example 1. Otherwise, a similar procedure to that of Example 1 was performed, and thus a positive electrode active material was obtained.

### Example 9

First, 0.04194 g of LiOH·H₂O and 6.181 g of H₃BO₃ were dissolved in 200 ml of water to prepare a treatment liquid. Hereinafter, this treatment liquid will be referred to as a treatment liquid D. Then, 10.4 mL of the treatment liquid D was added to 10 g of the core particles used in Example 1. Otherwise, a similar procedure to that of Example 1 was performed, and thus a positive electrode active material was obtained.

### Comparative Example 1

The core particles obtained in Example 1 were used as a positive electrode active material on an "as-is" basis.

### Comparative Example 2

A positive electrode active material was obtained in a similar manner to that of Example 8, except that 55 mL of the treatment liquid C was added.

### Comparative Example 3

A positive electrode active material was obtained in a similar manner to that of Example 9, except that 28 mL of the treatment liquid D was added.

### Evaluation

For each of the positive electrode active materials obtained in the examples and the comparative examples, the amounts of elements contained and D₅₀ were measured in accordance with the following procedures. Moreover, the positive electrode active materials obtained in the examples and the comparative examples were analyzed by XPS. Furthermore, batteries in which the positive electrode active materials obtained in the examples and the comparative examples were respectively used were produced, and the interface resistance was measured. Table 1 below shows the results.

### Amounts of Elements Contained

A positive electrode active material was dissolved in aqua regia, and the solution was diluted with water. The diluted solution was analyzed using an ICP emission spectrometer, and the amounts of elements contained were measured.

### D₅₀ Measurement

An automatic sample feeder ("Microtorac SDC" manufactured by Nikkiso Co., Ltd.) for a laser diffraction particle size distribution measurement apparatus was used. A positive electrode active material was added to an aqueous solvent (water:ethanol = 80:20 (volume ratio)), and the resulting liquid was fed into the apparatus to a specified line. Next, ultrasonic waves at 40 W were applied for 360 seconds under conditions at a flow rate of 80%. After that, particle size distribution measurement was performed using a laser diffraction particle size distribution measurement apparatus "MT3000II" manufactured by Nikkiso Co., Ltd. The measurement liquid was passed through a 60- m filter, and D₅₀ was determined from a chart of volume-based particle size distribution obtained by this measurement. The conditions regarding the settings of the apparatus were as follows.
Solvent refractive index: 1.33
Particle permeability condition: permeable
Particle refractive index: 2.46
Shape: non-spherical
Measurement range: 0.133 to 704.0 m

The measurement time was 30 seconds, and an average value of two measurements was used as D₅₀.

### Analysis by XPS

An XPS analyzer "XPS Quantam2000" manufactured by ULVAC-PHI, Inc. was used. The molar ratio of Li/M was calculated from the proportions of elements that were present on the outermost surface of a positive electrode active material. The device specifications, conditions, and the like used in the measurement were as follows.
X-ray source: monochromatized AlKα1 (1486.7 eV)
X-ray power: 100 W
X-ray irradiation area: 100 m dia. × 1 mm
Pass energy: 23.5 eV
Measurement interval: 0.1 eV
Measured elements and orbitals:
   Li: 1s
   Nb: 3d
   B: 1s
   O: 1s
   C: 1s

### Measurement of Interface Resistance

A positive electrode was produced according to a common method using each of the positive electrode active materials obtained in the examples and the comparative examples. Specifically, the obtained positive electrode active material, Li_{5.8}PS_{4.8}Cl_{1.2} as a sulfide solid electrolyte (argyrodite-type solid electrolyte), and VGCF (registered trademark) as a conductivity aid were mixed in a mass ratio of 80:17:3 to produce a positive electrode mixture, which was taken as a positive electrode. Furthermore, a negative electrode was produced according to a common method using graphite as a negative electrode active material. Next, the positive electrode, the sulfide solid electrolyte (Li_{5.8}PS_{4.8}Cl_{1.2}, which was an argyrodite-type solid electrolyte), and the negative electrode were stacked in this order, and thus a solid-state battery was produced. After the third cycle and the 300-th cycle of charge and discharge, the solid-state battery was discharged to 40% of the discharge capacity, and the AC impedance was measured. An interface resistance ( ) was calculated from the intersection with the horizontal axis in a Cole-Cole plot that was a complex impedance plane plot of the measurement results. Furthermore, the difference between an interface resistance value R1 and an interface resistance value R2 after the 300-th cycle (the value of increase in reaction resistance, R2 - R1) relative to the interface resistance value R1 was expressed in terms of percentage, and used as the interface resistance increase rate. That is to say, the interface resistance increase rate was expressed as (R2-R1)/R1×100.

The device specifications, conditions, and the like used in the measurement were as follows.
- Measuring apparatus: Solartron 1255B frequency response analyzer manufactured by Toyo Technica Inc.
- AC amplitude: 10 mV
- Frequency region: 1.0 × 10⁶ to 1.0 × 10¹ Hz

Table 1

| | Unit | Ex. 1 | Ex. 2 | Ex. 3 | Ex. 4 | Ex. 5 | Ex. 6 | Ex. 7 | Ex. 8 | Ex. 9 | Com. Ex 1 | Com. Ex. 2 | Com. Ex. 3 |
|---|---|---|---|---|---|---|---|---|---|---|---|---|---|
| LiM on surface | Molar ratio | 2.0 | 2.0 | 1.9 | 1.7 | 3.3 | 2.8 | 3.0 | 3.7 | 1.0 | - | 4.2 | 0.7 |
| B in active material | mass% | 0.18 | 0.79 | 1.64 | 2.85 | 0.07 | 0.16 | 0.07 | 0.32 | 0.56 | - | 1.91 | 1.2 |
| Nb in active material | mass% | 0 | 0 | 0 | 0 | 0.55 | 1.2 | 1.21 | 0 | 0 | | 0 | 0 |
| B+Nb in active material | mass% | 0.18 | 0.79 | 1.64 | 2.85 | 0.62 | 1.4 | 1.31 | 0.32 | 0.56 | - | 1.91 | 1.2 |
| Li/(B+Nb) on surface | Molar ratio | | | | | 3.3 | 2.8 | 3 | | | | | |
| Nb/B in active material | Mass ratio | - | - | - | - | 7.85 | 7.75 | 17.71 | - | - | - | - | - |
| D₅₀ | µm | 25 | 2.3 | 2.2 | 2.2 | 2.5 | 2.6 | 2.6 | 2.3 | 2.4 | 2.8 | 2.3 | 2.3 |
| Interface resistance | Ω | 39.0 | 39.5 | 73.4 | 92.2 | 35.2 | 30.8 | 42.1 | 46.9 | 73.6 | 51.7 | 100.0 | 247.6 |
| Interface resistance after 300-th cycle | Ω | 80.0 | 80.3 | 153.1 | 168.2 | 52.9 | 44.7 | 71.0 | 72.7 | 207.9 | 5500 | 271.9 | 1159.3 |
| Interface resistance increase rate | % | 105.1 | 103.0 | 108.5 | 82.4 | 50.3 | 45.1 | 68.6 | 55.0 | 182.5 | 10000 | 171.9 | 368.2 |

As is clear from the results shown in Table 1, it can be seen that, in the solid-state batteries in which the positive electrode active materials obtained in the examples were respectively used, both the interface resistance and the interface resistance increase rate after the 300-th cycle were reduced. On the other hand, in the solid-state battery in which the positive electrode active material obtained in Comparative Example 1 was used, even though the interface resistance was low, the interface resistance increase rate was extremely high.

It is considered that, in the solid-state battery in which the positive electrode active material obtained in Comparative Example 2 was used, the interface resistance and the interface resistance increase rate were high because lithium carbonate and BO₃³⁻ were generated due to the high molar ratio of Li/M.

It is considered that, in the solid-state battery in which the positive electrode active material obtained in Comparative Example 3 was used, the interface resistance and the interface resistance increase rate were high because Li ion conductivity of the coating layer was not secured due to the low molar ratio of Li/M.

### Industrial Applicability

As has been described in detail above, according to the present invention, it is possible to provide a positive electrode active material with which an increase in the interface resistance between the positive electrode active material and a sulfide solid electrolyte over time can be suppressed and also the interface resistance is low.

## Claims

1. A positive electrode active material for use in a solid-state battery containing a sulfide solid electrolyte, the positive electrode active material comprising particles that have core particles containing a complex oxide of lithium and a metal element and a coating layer arranged on a surface of the core particles,
wherein the coating layer is composed of an oxide containing Li and M, where M represents B, or one or two or more elements selected from the group consisting of B, Nb, Ti, Zr, Ta, Zn, W, and Al, and
a molar ratio of Li/M on a surface of the coating layer, as obtained by X-ray photoelectron spectroscopy, is from 0.85 to 3.95.

2. The positive electrode active material according to claim 1, wherein a proportion of B in the positive electrode active material is from 0.02 to 3.5 mass%.

3. The positive electrode active material according to claim 1 or 2, wherein the M contains Nb in addition to B.

4. The positive electrode active material according to claim 3, wherein a proportion of a total amount of Nb and B in the positive electrode active material is from 0.5 to 2.5 mass%.

5. The positive electrode active material according to claim 3 or 4, wherein a molar ratio of Li/(B+Nb) on the surface of the coating layer, as obtained by X-ray photoelectron spectroscopy is from 1.5 to 3.6.

6. The positive electrode active material according to any one of claims 3 to 5, wherein a mass ratio of Nb/B in the positive electrode active material is from 1 to 30.

7. The positive electrode active material according to any one of claims 1 to 6, wherein the complex oxide of lithium and a metal element is one of a layered rock salt-type compound and a spinel-type compound.

8. The positive electrode active material according to any one of claims 1 to 7, wherein the sulfide solid electrolyte contains Li and S and has lithium ion conductivity.

9. The positive electrode active material according to any one of claims 1 to 8, wherein the sulfide solid electrolyte is an argyrodite-type solid electrolyte.

10. A positive electrode mixture comprising the positive electrode active material according to any one of claims 1 to 9.

11. The positive electrode mixture according to claim 10, further comprising a sulfide solid electrolyte.

12. A solid-state battery comprising a positive electrode, a negative electrode, and a solid electrolyte,
wherein the solid electrolyte is composed of a sulfide, and
the positive electrode contains the positive electrode active material according to any one of claims 1 to 8.

## Amended claims

### Amended claims under Art. 19.1 PCT

1. A positive electrode active material for use in a solid-state battery containing a sulfide solid electrolyte, the positive electrode active material comprising particles that have core particles containing a complex oxide of lithium and a metal element and a coating layer arranged on a surface of the core particles,
wherein the coating layer is composed of an oxide containing Li and M, where M represents B, or one or two or more elements selected from the group consisting of B, Nb, Ti, Zr, Ta, Zn, W, and Al,
a molar ratio of Li/M on a surface of the coating layer, as obtained by X-ray photoelectron spectroscopy, is from 0.85 to 3.95, and
a proportion of B in the positive electrode active material is from 0.02 to 3.5 mass%.

2. (Canceled).

3. (Amended). The positive electrode active material according to claim 1, wherein the M contains Nb in addition to B.

4. The positive electrode active material according to claim 3, wherein a proportion of a total amount of Nb and B in the positive electrode active material is from 0.5 to 2.5 mass%.

5. The positive electrode active material according to claim 3 or 4, wherein a molar ratio of Li/(B+Nb) on the surface of the coating layer, as obtained by X-ray photoelectron spectroscopy is from 1.5 to 3.6.

6. The positive electrode active material according to any one of claims 3 to 5, wherein a mass ratio of Nb/B in the positive electrode active material is from 1 to 30.

7. (Amended). The positive electrode active material according to any one of claims 1 and 3 to 6, wherein the complex oxide of lithium and a metal element is one of a layered rock salt-type compound and a spinel-type compound.

8. (Amended). The positive electrode active material according to any one of claims 1 and 3 to 7, wherein the sulfide solid electrolyte contains Li and S and has lithium ion conductivity.

9. (Amended). The positive electrode active material according to any one of claims 1 and 3 to 8, wherein the sulfide solid electrolyte is an argyrodite-type solid electrolyte.

10. (Amended). A positive electrode mixture comprising the positive electrode active material according to any one of claims 1 and 3 to 9.

11. The positive electrode mixture according to claim 10, further comprising a sulfide solid electrolyte.

12. (Amended). A solid-state battery comprising a positive electrode, a negative electrode, and a solid electrolyte,
wherein the solid electrolyte is composed of a sulfide, and
the positive electrode contains the positive electrode active material according to any one of claims 1 and 3 to 8.
